(19) **Europäisches Patentamt**

**European Patent Office**

**Office européen des brevets**

(11) **EP 1 086 387 B1**

(12) **FASCICULE DE BREVET EUROPEEN**

(45) Date de publication et mention
de la délivrance du brevet:
**24.08.2005   Bulletin 2005/34**

(51) Int Cl.$^7$: **G01T 3/00**

(86) Numéro de dépôt international:
**PCT/FR2000/000848**

(21) Numéro de dépôt: **00917120.8**

(22) Date de dépôt: **05.04.2000**

(87) Numéro de publication internationale:
**WO 2000/062099 (19.10.2000 Gazette 2000/42)**

(54) **PROCEDE ET DISPOSITIF D'ANALYSE D'OBJETS RADIOACTIFS AU MOYEN DE NEUTRONS**

VERFAHREN UND VORRICHTUNG ZUR ANALYSE RADIOAKTIVER GEGENSTÄNDE UNTER VERWENDUNG VON NEUTRONEN

METHOD AND DEVICE FOR ANALYSING RADIOACTIVE OBJECTS USING NEUTRONS

(84) Etats contractants désignés:
**BE DE GB**

(30) Priorité: **08.04.1999   FR 9904396**

(43) Date de publication de la demande:
**28.03.2001   Bulletin 2001/13**

(73) Titulaires:
• **COMMISSARIAT A L'ENERGIE ATOMIQUE**
**75752 Paris Cedex 15 (FR)**
• **COMPAGNIE GENERALE DES MATIERES**
**NUCLEAIRES (COGEMA)**
**78140 Velizy-Villacoublay (FR)**

(72) Inventeurs:
• **LYOUSSI, Abdallah**
**04100 Manosque (FR)**

• **PASQUALI-BARTHELEMY, Raymond**
**F-04100 Manosque (FR)**
• **PAYAN, Emmanuel**
**04100 Manosque (FR)**
• **RAOUX, Anne-Cécile**
**F-83560 Vinon-sur-Verdon (FR)**

(74) Mandataire: **Ilgart, Jean-Christophe et al**
**c/o Brevatome,**
**3, rue du Docteur Lancereaux**
**75008 Paris (FR)**

(56) Documents cités:
**US-A- 3 222 521          US-A- 4 483 816**
**US-A- 4 497 768**

## Description

## DOMAINE TECHNIQUE

La présente invention concerne un procédé et un dispositif d'analyse d'objets radioactifs qui utilisent une mesure neutronique de ces objets.

L'invention permet d'analyser ces derniers de manière non destructive (c'est-à-dire en garantissant l'intégrité physique des objets) en effectuant des mesures actives (c'est-à-dire contrôlées par un rayonnement extérieur) sur ces objets.

L'invention s'applique notamment au contrôle de processus de traitement de produits radioactifs et à la caractérisation du contenu de colis de déchets radioactifs. Ces colis sont des conteneurs, généralement en béton ou en acier, dans lesquels sont placés les déchets radioactifs éventuellement préalablement enrobés dans une matrice.

L'invention se rapporte plus particulièrement au dosage de la matière fissile et/ou de la matière fertile contenues dans ces colis de déchets radioactifs, pour connaître de manière non destructive les quantités de certains éléments chimiques présents dans ces déchets.

Elle trouve une application directe dans les installations utilisant les techniques non destructives actives de dosage. En particulier, le dosage de la matière fissile et/ou de la matière fertile permet de quantifier la masse de combustible résiduel.

## ÉTAT DE LA TECHNIQUE ANTÉRIEURE

Dans le but de connaître de manière non destructive la quantité de certains isotopes fissiles contenus dans un colis de déchets, plusieurs méthodes de mesure ont été étudiées parmi lesquelles on trouve la technique d'interrogation neutronique par le biais de neutrons de 14 MeV produits par un générateur approprié.

Plus particulièrement, la mesure des neutrons prompts (« prompt neutrons ») et des neutrons retardés (« delayed neutrons »), produits par fission thermique de la matière fissile présente dans le colis de déchets, est écrite dans le àccument US-A-4483816 (J.T. Caldwell et al.).

De manière générale, l'interrogation d'un objet par un flux pulsé de neutrons thermiques (« thermal neutrons ») est utilisée pour identifier la présence de matière fissile au sein de cet objet. Une telle méthode est, le plus souvent, utilisée pour mesurer les isotopes fissiles que sont l'uranium 235, le plutonium 239 et le plutonium 241. L'interprétation des mesures nécessite néanmoins une connaissance préalable de la composition isotopique de la matière fissile.

Avec la technique décrite dans le document mentionné plus haut, les principaux isotopes fissiles ainsi caractérisés sont l'uranium 233, l'uranium 235 et le plutonium 239. La quantification des différents isotopes est réalisée grâce à l'exploitation des signaux prompts et retardés, issus des neutrons thermiques. On obtient alors deux équations linéaires. Une troisième équation est obtenue par la mesure de coïncidences sur les neutrons passifs (c'est-à-dire émis naturellement par la matière). Il est donc possible de calculer les différentes masses, présentes dans l'objet à mesurer, des isotopes fissiles précédemment cités, moyennant la connaissance de plusieurs coefficients d'étalonnage (préalablement calculés).

Néanmoins, cette technique ne donne aucune information concernant la présence et la quantité de matière fertile, telle que l'uranium 238, dans l'objet à analyser.

## EXPOSÉ DE L'INVENTION

La présente invention a pour but de remédier à cet inconvénient.

La caractérisation de matières fissile et fertile nécessite l'utilisation d'un flux interrogateur de neutrons thermiques, épithermiques (« epithermal ») et rapides (« fast »), le seuil de fission de l'uranium 238 se situant à une énergie d'environ 1 MeV. De plus la contribution de l'uranium 238 au signal neutronique mesuré n'est exploitable que pour les neutrons retardés émis par les fragments de fission de l'uranium 238. Ainsi, le signal prompt mesuré correspond aux neutrons issus de fission thermique (matière fissile) et le signal retardé aux neutrons issus de fission thermiques et rapides (matières fissile et fertile).

La présente invention associe justement l'interrogation thermique, épithermique et rapide à la détection des neutrons prompts et retardés afin de caractériser la matière fissile et/ou la matière fertile susceptibles d'être présentes dans un objet à mesurer.

De façon précise, la présente invention concerne un procédé d'analyse d'un objet, notamment d'un colis de déchets radioactifs, susceptible de contenir une matière fissile ou une matière fertile ou les deux, la matière fissile comprenant M isotopes fissiles et la matière fertile comprenant N isotopes fertiles, M et N étant des nombres entiers au moins égaux à 1, ce procédé étant caractérisé en ce que :

- on irradie l'objet par un flux neutronique formé de neutrons thermiques, épithermiques et rapides et résultant d'une suite d'impulsions initiales de neutrons rapides, les neutrons thermiques provoquant des fissions dans la matière fissile et les neutrons épithermiques et rapides provoquant des fissions dans la matière fissile et dans la matière fertile,

- on mesure les signaux neutroniques prompts et retardés émis par l'objet après chaque impulsion et on cumule ces signaux pour obtenir, après la dernière impulsion, la somme de tous les signaux,

- on détermine, à partir de cette somme, la contribution Sp des neutrons prompts issus des fissions thermiques et la contribution Sr des neutrons retardés issus des fissions thermiques, épithermiques et rapides,

- on exprime Sp et Sr comme des combinaisons linéaires des quantités respectives des M+N isotopes, les coefficients de ces combinaisons linéaires étant préalablement déterminés par étalonnage, et
- on détermine la quantité de chacun des M+N isotopes à partir de Sp et Sr ainsi exprimés et d'au moins M+N-2 informations supplémentaires, relatives aux quantités des M+N isotopes.

Ces informations supplémentaires sont par exemple des corrélations entre les quantités des M+ N isotopes.

Selon un mode de mise en oeuvre particulier du procédé objet de l'invention, les matières fissile et fertile comprennent l'uranium 235, l'uranium 238, le plutonium 239 et le plutonium 241.

La présente invention concerne aussi un dispositif d'analyse d'un objet, notamment d'un colis de déchets radioactifs, susceptible de contenir une matière fissile ou une matière fertile ou les deux, la matière fissile comprenant M isotopes fissiles et la matière fertile comprenant N isotopes fertiles, M et N étant des nombres entiers au moins égaux à 1, ce dispositif étant caractérisé en ce qu'il comprend :

- des moyens d'irradiation de l'objet par un flux neutronique formé de neutrons thermiques, épithermiques et rapides et résultant d'une suite d'impulsions initiales de neutrons rapides, les neutrons thermiques provoquant des fissions dans la matière fissile et les neutrons épithermiques et rapides provoquant des fissions dans la matière fissile et dans la matière fertile,
- des moyens de comptage de neutrons, prévus pour mesurer les signaux neutroniques prompts et retardés émis par l'objet après chaque impulsion, et
- des moyens de traitement des signaux ainsi mesurés, prévus pour cumuler ces signaux et obtenir, après la dernière impulsion, la somme de tous les signaux, déterminer, à partir de cette somme, la contribution Sp des neutrons prompts issus des fissions thermiques et la contribution Sr des neutrons retardés issus des fissions thermiques, épithermiques et rapides, et déterminer la quantité de chacun des M+N isotopes à partir de Sp et Sr et d'au moins M+N-2 informations supplémentaires, relatives aux quantités des M+N isotopes, en exprimant Sp et Sr comme des combinaisons linéaires de ces quantités, les coefficients de ces combinaisons linéaires étant préalablement déterminés par étalonnage.

Selon un mode de réalisation préféré du dispositif objet de l'invention, les moyens d'irradiation comprennent :

- au moins une source de neutrons rapides fonctionnant en mode pulsé et
- des moyens de thermalisation de ces neutrons rapides.

De préférence, les moyens de thermalisation comprennent une enceinte qui comporte une zone centrale destinée à recevoir l'objet et dont au moins trois côtés sont délimités par une épaisseur de matériau modérateur, la source de neutrons étant disposée sur un quatrième côté de cette enceinte et les moyens de comptage de neutrons étant disposés sur les trois côtés, entre la zone centrale et l'épaisseur de matériau modérateur, une épaisseur de matériau multiplicateur étant prévue entre la zone centrale et la source de neutrons ainsi qu'entre cette zone centrale et les moyens de comptage de neutrons.

Chaque moyen de comptage de neutrons peut être de plus entouré par une épaisseur de matériau neutrophage.

Chaque moyen de comptage de neutrons peut également être entouré d'un matériau modérateur.

Le dispositif objet de l'invention peut comprendre en outre une paroi en matériaux neutrophage et modérateur qui délimite le quatrième côté de l'enceinte, l'épaisseur correspondante de matériau multiplicateur étant comprise entre cette paroi et la zone centrale.

Le dispositif objet de l'invention peut comprendre en outre des moyens de rotation de l'objet dans la zone centrale de l'enceinte.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 illustre schématiquement des étapes d'un procédé conforme à l'invention,
- la figure 2 est une vue en perspective écorchée schématique d'un mode de réalisation particulier du dispositif objet de l'invention dans une position ouverte,
- la figure 3 est une vue de dessus en coupe schématique du dispositif de la figure 2 dans une position fermée,
- la figure 4 est une vue en perspective en coupe schématique d'un autre mode de réalisation particulier du dispositif objet de l'invention, et
- la figure 5 est une vue de dessus en coupe schématique du dispositif de la figure 4.

## EXPOSÉ DÉTAILLÉ DE MODES DE RÉALISATION PARTICULIERS

Un procédé conforme à l'invention utilise un flux neutronique interrogateur à la fois thermique, épithermique et rapide dans le but de provoquer des fissions dans un objet susceptible de contenir une matière fissile ou une matière fertile ou les deux. Ce flux neutronique peut être obtenu en utilisant au moins un générateur de neutrons fonctionnant en mode pulsé et produisant, par exemple par la réaction de fusion D-T, des neutrons rapides dont l'énergie vaut par exemple environ 14 MeV. Une cellule de thermalisation adaptée permet, quant à elle, d'obtenir un flux neutronique à la fois thermique, épithermique et rapide. D'une part, les neutrons thermiques provoquent des fissions dans la matière fissile et, d'autre part, les neutrons épithermiques et rapides provoquent des fissions à la fois dans la matière fissile et dans la matière fertile.

De plus, l'utilisation d'une méthode de mesure, dans laquelle on réalise une sommation du signal après chaque impulsion neutronique, permet de distinguer sur un même signal la contribution des neutrons prompts issus des fissions thermiques et la contribution des neutrons retardés issus des fissions thermiques, épithermiques et rapides. En effet, seules les fissions thermiques participent au signal prompt puisque les fissions épithermiques et rapides sont instantanées, leur contribution étant donc noyée dans la partie du signal correspondant aux neutrons interrogateurs.

Il convient de noter que l'on peut utiliser plus d'une source de neutrons pulsée pour augmenter le flux neutronique et donc la sensibilité des mesures.

Le nombre d'impulsions de neutrons rapides peut être très grand et valoir par exemple plusieurs millions. Cela dépend de la précision et de la limite de détection recherchées.

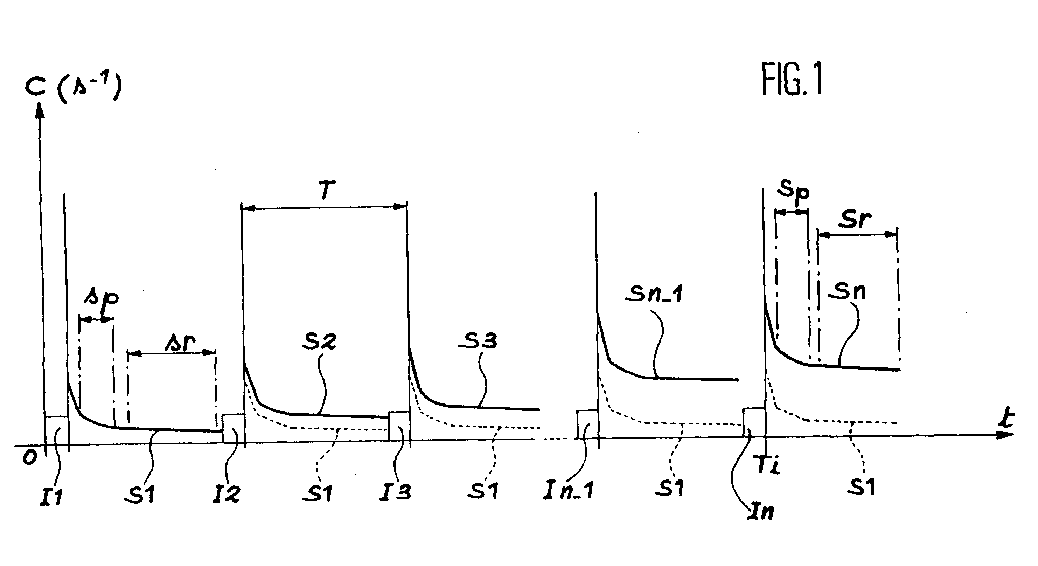

Le principe d'un procédé conforme à l'invention, utilisant une source pulsée de neutrons rapides et une mesure séquentielle, est schématiquement illustré par la figure 1.

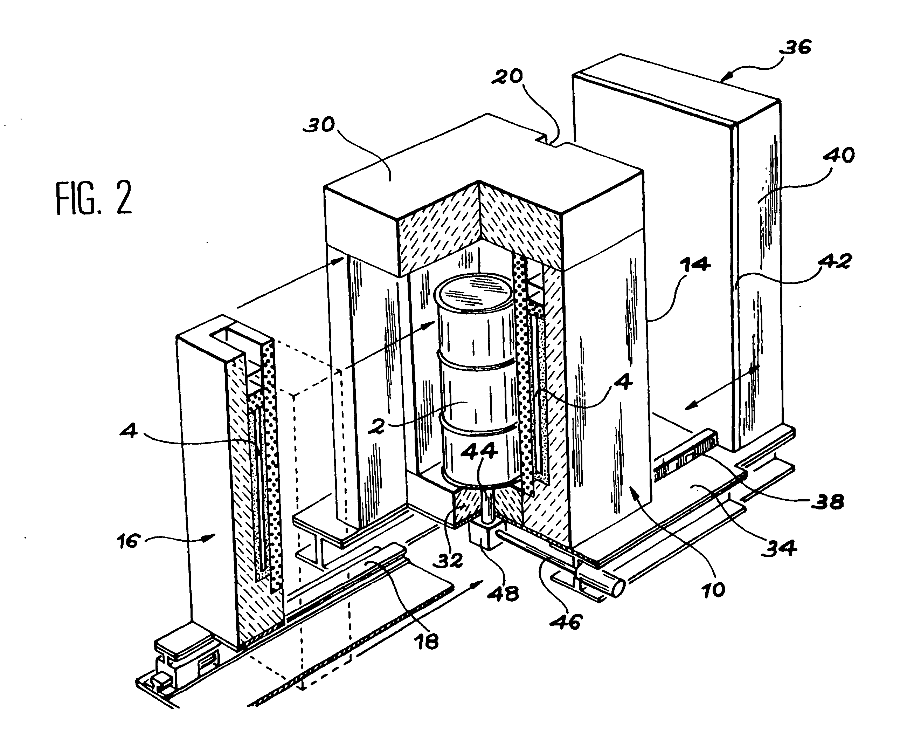

On irradie donc l'objet à analyser, par exemple un colis de déchets radioactifs, par des neutrons thermiques, épithermiques et rapides résultant des impulsions de la source (et obtenus comme on le verra plus loin dans la description des figures 2 à 5).

Sur la figure 1, le temps $\underline{t}$ est porté en abscisse et le nombre de coups par seconde $C(s^{-1})$ est porté en ordonnée (avec une échelle logarithmique).

On a représenté les impulsions neutroniques I1 (première impulsion), I2, I3 ... In-1 et In (dernière impulsion). La période du générateur est notée T. La fin de la dernière impulsion a lieu à un instant noté Ti. On voit aussi le signal dû à une seule impulsion, noté S1, et les signaux intégrés respectivement dus à deux impulsions (S2), à trois impulsions (S3) ... à n-1 impulsions (Sn-1) et à n impulsions (Sn).

On mesure donc les signaux neutroniques prompts, tels que sp, et retardés, tels que sr, émis après chaque impulsion de la source et l'on cumule ces signaux. A partir du signal intégré Sn on détermine la contribution Sp des neutrons prompts issus des fissions thermiques et la contribution Sr des neutrons retardés issus des fissions thermiques, épithermiques et rapides.

En une seule mesure, il est ainsi possible d'obtenir deux informations Sp et Sr sur le combustible résiduel se trouvant dans le colis.

Selon l'invention, on couple ces résultats à au moins deux autres informations telles que, par exemple, des corrélations reliant les masses des isotopes recherchés et obtenus par des codes de calcul associés au retour d'expérience des usines de retraitement du combustible.

À titre d'exemple, on suppose que le colis contient de façon résiduelle de l'uranium 235, de l'uranium 238, du plutonium 239 et du plutonium 241. On peut alors écrire l'ensemble de ces informations sous la forme, par exemple, du système d'équations suivant :

$$S_p = a_1 m(^{235}U) + a_2 m(^{238}U) + a_3 m(^{239}Pu) + a_4 m(^{241}Pu)$$

$$S_r = b_1 m(^{235}U) + b_2 (^{238}U) + b_3 m(^{239}Pu) + b_4 m(^{241}Pu)$$

$$R_1 = \frac{m(^{235}U)}{m(^{238}U)}$$

$$R_2 = \frac{m(^{241}Pu)}{m(^{239}Pu)}$$

Avec :

$S_p$ : signal issu des neutrons prompts des fissions thermiques (en coups/s),

$S_r$ : signal issu des neutrons retardés des fissions thermiques, épithermiques et rapides (en coups/s),

$R_1$ : corrélation entre la masse $m(^{235}U)$ de l'isotope 235 de l'uranium et la masse $m(^{238}U)$ de l'isotope 238 de l'uranium,

$R_2$ : corrélation entre la masse $m(^{239}Pu)$ de l'isotope 239 du plutonium et la masse $m(^{241}Pu)$ de l'isotope 241 du plutonium,

$a_i$ et $b_i$ (i allant de 1 à 4) : coefficients d'étalonnage en $coups.s^{-1}.g^{-1}$, obtenus avec un objet connu (les masses étant exprimées en grammes).

Le coefficient d'étalonnage $a_2$ est nul, puisque la matière fertile, en l'occurrence $^{238}U$, ne participe pas au signal mesuré issu des neutrons prompts.

La résolution du système permet d'obtenir les masses recherchées.

L'intérêt de ce procédé conforme à l'invention réside dans le fait que l'on peut « interroger » simultanément la matière fissile et la matière fertile présentes dans l'objet à mesurer à l'aide d'une ou de plusieurs sources pulsées de neutrons rapides, par exemple un ou plusieurs générateurs pulsés de neutrons de 14 MeV.

De par sa conception (des exemples seront donnés par la suite), le dispositif utilisé pour mettre en oeuvre ce procédé permet de disposer de flux thermiques, épithermiques et rapides tout en accentuant la composante rapide.

Le contraste entre la matière fissile et la matière fertile est ainsi amélioré.

Par ailleurs, la mise en oeuvre d'une méthode d'acquisition séquentielle associée améliore de façon notable la sensibilité de la mesure du signal retardé, remédiant ainsi à la faible statistique des neutrons retardés de fission. De plus, l'association d'informations complémentaires comme, par exemple, des corrélations faisant intervenir les rapports massiques, molaires, atomiques ou autres, des différents isotopes recherchés, permet de quantifier séparément chacun des isotopes fissiles et fertiles présents dans les déchets. Cette quantification de chaque isotope est donc obtenue à la suite d'une seule et unique mesure neutronique sur l'objet analysé.

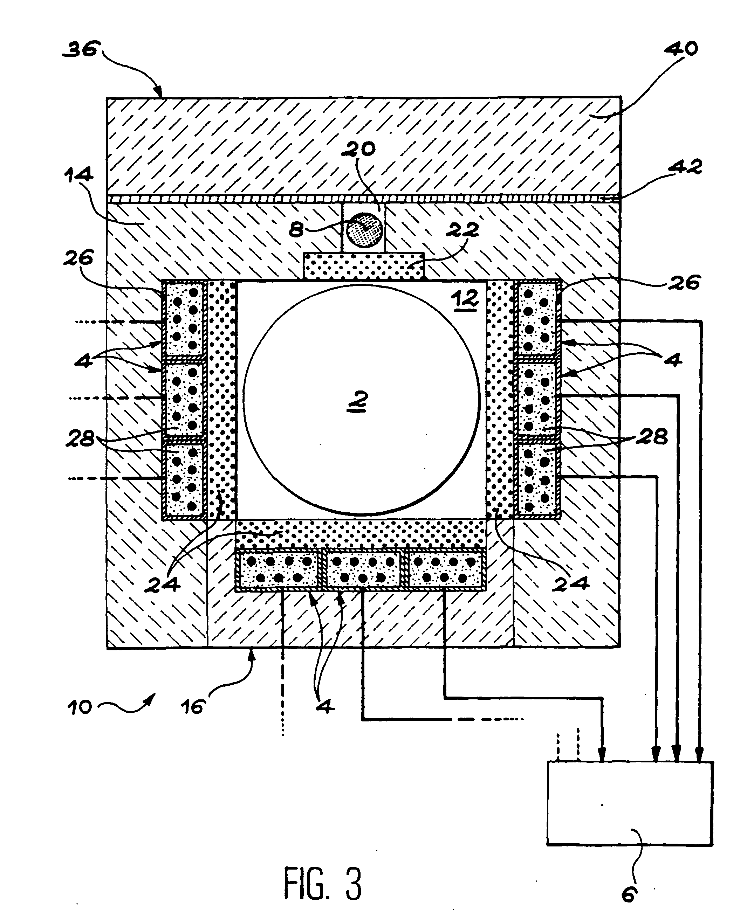

Le dispositif conforme à l'invention, dont la figure 2 est une vue en perspective écorchée et la figure 3 une vue de dessus en coupe, est destiné à caractériser un objet comme par exemple un conteneur de déchets radioactifs 2.

Ce dispositif comprend :

- des moyens d'irradiation du conteneur 2 par un flux de neutrons thermiques, épithermiques et rapides,
- des moyens 4 de comptage des neutrons permettant de mesurer des signaux neutroniques prompts et retardés émis par le conteneur après chaque impulsion et
- des moyens 6 de traitement des signaux ainsi mesurés, permettant de cumuler ces signaux, de déterminer, à partir de la somme de ces signaux, la contribution $S_p$ des neutrons prompts issus des fissions thermiques et la contribution $S_r$ des neutrons retardés issus des fissions thermiques, épithermiques et rapides, et de déterminer la masse de chacun des isotopes fissiles et fertiles des déchets comme on l'a vu plus haut.

Les moyens d'irradiation comprennent un générateur 8 de neutrons rapides, fonctionnant en mode pulsé, et une enceinte 10 de thermalisation de ces neutrons rapides, permettant d'obtenir le flux de neutrons thermiques, épithermiques et rapides.

Cette enceinte comprend une zone centrale 12 destinée à recevoir le conteneur 2. Cette zone centrale a une forme sensiblement carrée et elle est délimitée par une paroi 14 en un matériau modérateur, par exemple le graphite.

Une partie 16 de cette paroi est mobile -elle est par exemple montée sur des rails 18 comme on le voit sur la figure 2- pour permettre l'introduction du conteneur dans la zone centrale.

Sur la figure 2, l'enceinte est ouverte alors qu'elle est fermée sur la figure 3 (lorsque le conteneur est irradié par les neutrons).

La partie de la paroi 14 située en regard de la partie mobile 16, comporte un espace 20 dans lequel est logé le générateur de neutrons 8.

Les moyens de comptage de neutrons sont des blocs de détection neutronique 4 prévus dans la partie mobile 16 de la paroi 14 et dans les deux parties de cette paroi qui sont adjacentes à cette partie mobile et situées en regard l'une de l'autre.

Un élément 22 en matériau multiplicateur, par exemple du plomb, est interposé entre le générateur et la zone centrale 12. De même un autre élément 24 en ce matériau multiplicateur est interposé entre chaque groupe de blocs de détection 4 et cette zone centrale.

De plus, chaque bloc de détection 4 est entouré par une couche 26 de matériau neutrophage comme par exemple le cadmium et contient des compteurs de neutrons, par exemple des détecteurs $^3$He, entourés d'un autre matériau modérateur 28 comme par exemple le polyéthylène.

L'enceinte est fermée à sa partie supérieure par un couvercle 30 en graphite. Elle est fermée à sa partie inférieure par une base 32 également en graphite. De plus cette enceinte repose sur un socle 34 par exemple en acier.

Le dispositif de la figure 2 comprend en outre une paroi 36, mobile grâce à des rails 38 prévus sur le socle 34, pour pouvoir être approchée ou au contraire éloignée de la partie de la paroi 14 où se trouve le générateur 8. Cette paroi mobile 36 est espacée de cette partie dans le cas de la figure 2 alors qu'elle est placée au contact de cette partie dans le cas de la figure 3.

Cette paroi mobile 36 est faite de matériaux neutrophage et modérateur : elle est par exemple composée d'un élément 40 en graphite, revêtu d'une couche 42 de carbure de bore en regard de la partie de la paroi 14 où se trouve le générateur.

On précise que les neutrons rapides émis par le générateur 8 en direction de la paroi mobile 36 sont thermalisés par l'élément 40 en graphite et absorbés par la couche 42 en carbure de bore et ne reviennent donc pas vers le conteneur 2. Cette paroi mobile 36 permet un réglage du flux de neutrons.

Afin d'obtenir une irradiation homogène du conteneur 2 par les neutrons, on peut prévoir (figure 2) des moyens de rotation de ce conteneur dans la zone centrale de l'enceinte. Ces moyens de rotation peuvent comprendre un plateau (non représenté) sur lequel repose le conteneur et des moyens de mise en rotation du plateau, comprenant par exemple un axe 44 rigidement solidaire de ce plateau et traversant la base 32 de l'enceinte 10 ainsi qu'un autre axe 46 mis en rotation par un moteur non représenté et mettant l'axe 44 en rotation par l'intermédiaire d'engrenages contenus dans une boîte 48.

Les détecteurs des blocs 4, qui permettent le comptage du signal prompt, et du signal retardé de fission, sont de préférence optimisés de manière connue pour avoir une sensibilité optimale à une énergie donnée.

Ils sont bien entendu reliés à des alimentations électriques (non représentées) nécessaires à leur fonctionnement et sont également reliés aux moyens 6 de traitement des signaux, placés à l'extérieur de l'enceinte 10.

Les éléments 24 en plomb, qui sont disposés devant les blocs de détection 4, ont un rôle de protection radiologique. En effet, les conteneurs mesurés peuvent être très radioactifs et peuvent en particulier émettre un rayonnement gamma élevé. Il est alors nécessaire de protéger les compteurs afin de les utiliser dans des conditions optimales.

Les neutrons, qui sont issus du générateur 8 et pénètrent dans les éléments 22 et 24 en plomb, subissent des réactions du type (n, 2n). Ceci permet d'augmenter l'intensité du flux neutronique interrogateur d'environ 60%.

Puis chaque neueron interrogateur peut interagir suivant deux cas de figures :

> 1) Le neutron est suffisamment ralenti par les matériaux modérateurs, les matériaux des structures et l'objet à mesurer lui-même, jusqu'à atteindre une énergie thermique. Il induit alors, dans l'objet à mesurer, des réactions de fission sur la matière fissile (par exemple $^{235}$U, $^{239}$Pu, $^{241}$Pu).

> 2) Le neutron est ralenti mais possède une énergie supérieure à environ 1MeV. Il induit alors dans l'objet à mesurer des réactions de fission non seulement sur la matière fissile (par exemple $^{235}$U, $^{239}$Pu, $^{241}$Pu) mais aussi sur la matière fertile (par exemple $^{238}$U).

A la suite des fissions thermiques, plusieurs neutrons rapides (2 à 3 par fission en moyenne), d'une énergie moyenne de 2 MeV, sont émis instantanément : ce sont les neutrons prompts. Ils sont détectés dans les blocs 4 entourés de matériau neutrophage c'est-à-dire absorbant, comme le cadmium, ce qui les rend sensibles uniquement aux neutrons rapides. Ceci permet de s'affranchir en majeure partie du bruit de fond dû aux neutrons issus du générateur 8, qui sont thermiques à cet instant de la mesure. Le signal des neutrons prompts est néanmoins superposé à différents termes de bruit de fond, dont les principaux sont le « bruit de fond actif » (signal actif sans contaminant) et le bruit de fond dû à l'émission neutronique passive du contaminant.

La mesure des neutrons prompts ne peut pas débuter tant que les neutrons du générateur ne sont pas entièrement thermalisés, car le signal qu'ils induisent, pendant quelques centaines de microsecondes après l'impulsion du générateur, est très important. De ce fait, tous les neutrons prompts produits pendant cette première phase de la mesure, et notamment ceux issus de fissions induites par les neutrons rapides du générateur, ne sont pas détectables, car ils sont noyés dans le bruit de fond.

Le signal dû aux neutrons retardés de fission est superposé à différents bruits de fond, dont le plus important est l'émission neutronique passive du contaminant. Le signal des neutrons retardés apparaît comme constant à l'échelle d'un cycle de mesure, de durée voisine de 10 ms, car leur délai d'émission est très grand par rapport à cette durée. En effet, ils apparaissent quelques centaines de millisecondes à quelques dizaines de secondes après la fission dont ils proviennent, à la suite de la désintégration β- de certains produits de fission. Les neutrons retardés détectés sont donc issus de cycles de mesure antérieurs.

Les neutrons retardés issus de fissions induites par des neutrons rapides contribuent au signal neutronique retardé. En effet, puisque l'émission d'un neutron retardé est différée par rapport à la fission qui l'engendre, il est possible de détecter aussi bien des neutrons retardés issus de fissions induites par des neutrons rapides ou épithermiques ou bien par des neutrons thermiques.

Une conséquence importante est que la matière fertile (par exemple $^{238}$U) contribue au signal neutronique retardé, mais pas à celui des neutrons prompts, puisque les neutrons prompts issus de fissions rapides ou épithermiques ne sont pas détectables. En fait, cet isotope a une section efficace de fission à l'énergie thermique très petite par rapport à celle des isotopes fissiles, ce qui rend sa contribution au signal des neutrons prompts totalement négligeable, puisque le spectre en énergie des neutrons interrogateurs est purement thermique lors de la mesure des neutrons prompts.

Cependant, la section efficace de fission de l'uranium 238 est du même ordre de grandeur que celle des isotopes fissiles au-dela de 1 MeV. Par ailleurs, comme cet isotope peut parfois être en proportion importante dans le contaminant, il induit alors un signal retardé non négligeable par rapport à celui des isotopes fissiles.

Une méthode de comptage séquentiel est utilisée lors de l'acquisition du signal. Ainsi, les informations issues des contributions respectives des neutrons prompts et retardés au signal total auxquelles sont associées, par exemple, des corrélations telles que les rapports massiques des isotopes 235 et 238 de l'uranium, et 239 et 241 du plutonium, permettent de quantifier chacun des isotopes précédemment cités.

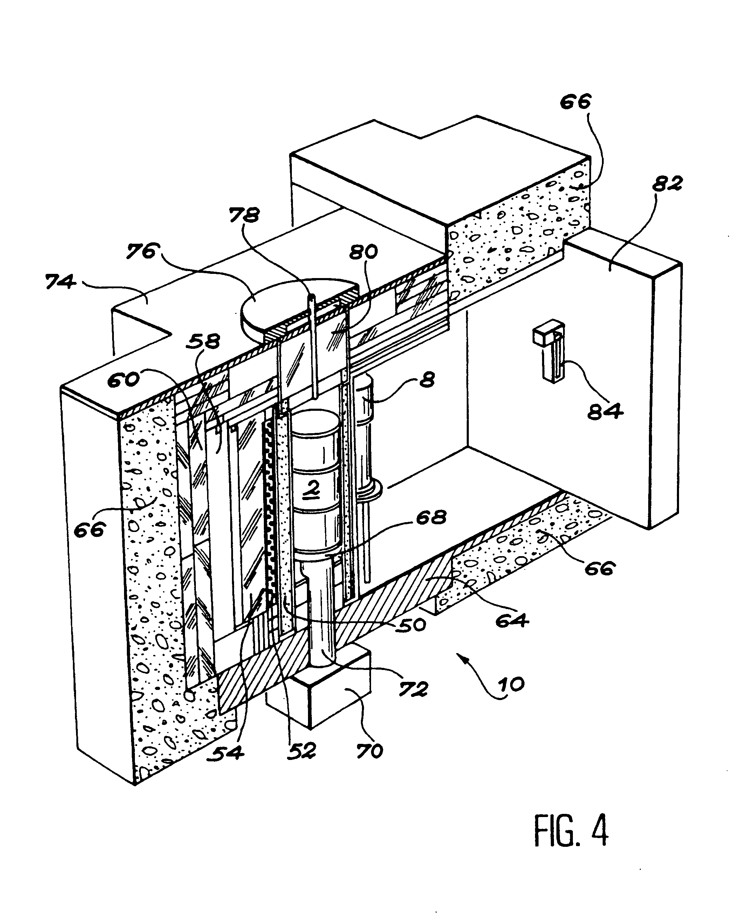

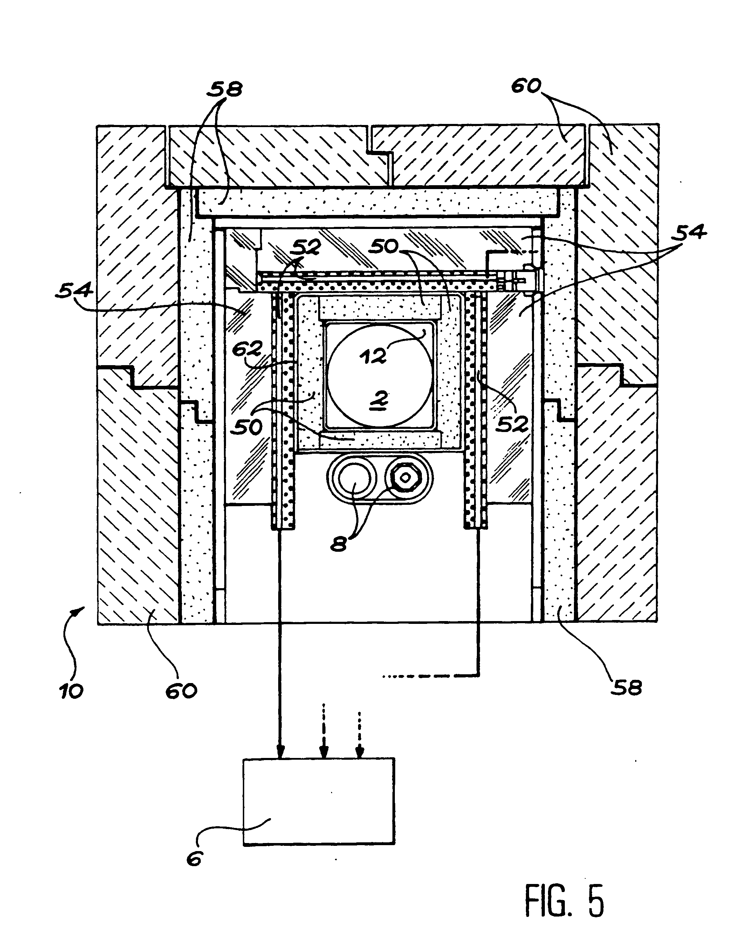

Un autre dispositif conforme à l'invention est schématiquement représenté sur les figures 4 et 5. La figures 4 est une vue en perspective en coupe de cet autre dispositif tandis que la figure 5 en est une vue de dessus en coupe.

Le dispositif des figures 4 et 5 comporte encore une enceinte 10 comprenant une zone centrale 12 destinée à recevoir par exemple un conteneur de déchets radioactifs 2 et délimitée par quatre parois 50 en matériau multiplicateur par exemple du plomb.

A l'extérieur de trois de ces parois et contre celles-ci sont placés des compteurs de neutrons 52 qui sont entourés d'un matériau modérateur, le polyéthylène par exemple. À l'extérieur de la quatrième paroi 50 et contre celle-ci sont placés deux générateurs pulsés de neutrons, rapides 8.

Comme on le voit sur la figure 5, des parois 54 en matériau modérateur, par exemple le graphite, sont placées contre les compteurs de neutrons.

Des éléments 58 en matériau absorbant, par exemple le polyéthylène boré, recouvrent les faces de l'ensemble ainsi obtenu sauf la face où se trouvent les générateurs de neutrons. De plus, des éléments 60 en matériau modérateur, par exemple le polyéthylène, recouvrent les éléments 58 en matériau absorbant.

On voit également sur la figure 5 les moyens 6 de traitement des signaux fournis par les compteurs de neutrons 52.

Des couches (non représentées) en matériau neutrophage, par exemple le cadmium, recouvrent les détecteurs de neutrons.

Une couche d'étanchéité 62, par exemple en matière plastique, entoure les parois 50.

En revenant à la figure 4 on voit la base 64 de l'enceinte, qui est par exemple en acier. On voit aussi diverses épaisseurs de béton 66 qui entourent le dispositif.

On peut encore prévoir des moyens de rotation du conteneur, comprenant par exemple un plateau tournant 68 que l'on peut mettre en rotation par l'intermédiaire d'un mécanisme approprié 70, par l'intermédiaire d'un arbre 72 qui traverse la base 64.

La partie supérieure du dispositif des figures 4 et 5 est recouverte par une plaque d'acier 74. Celle-ci est pourvue d'une ouverture en regard de la zone centrale de l'enceinte. Cette ouverture permet de mettre en place le conteneur 2 dans cette zone et, après les mesures, de le sortir du dispositif. De plus, cette ouverture est fermée par un couvercle 76 par exemple en acier, muni d'un système de préhension 78. Ce couvercle est prolongé vers le bas par un élément 80 en matériau modérateur, par exemple le polyéthylène.

On voit aussi sur la figure 4 un mur fixe 82 en béton qui se trouve en regard des générateurs de neutrons 8 et qui est espacé de ceux-ci. Sur la face de ce mur 82, située en regard des générateurs, est fixé un moniteur de flux 84 destiné à connaître le nombre de neutrons émis par les deux générateurs de neutrons 8.

Pour la maintenance du dispositif des figures 4 et 5, on peut prévoir des moyens appropriés (non représentés) disposés en regard de l'autre face du mur de béton 82 et aptes à pénétrer par des ouvertures (non représentées) dans ce dispositif.

**Revendications**

1. Procédé d'analyse d'un objet (2), notamment d'un colis de déchets radioactifs, susceptible de contenir une matière fissile ou une matière fertile ou les deux, la matière fissile comprenant M isotopes fissiles et la matière fertile comprenant N isotopes fertiles, M et N étant des nombres entiers au moins égaux à 1, ce procédé étant **caractérisé en ce que** :

   - on irradie l'objet par un flux neutronique formé de neutrons thermiques, épithermiques et rapides et résultant d'une suite d'impulsions initiales de neutrons rapides, les neutrons thermiques provoquent des fissions dans la matière fissile et les neutrons épithermiques et rapides provoquant des fissions dans la matière fissile et dans la matière fertile,

   - on mesure les signaux neutroniques prompts et retardés émis par l'objet après chaque impulsion et on cumule ces signaux pour obtenir, après la dernière impulsion, la somme de tous les signaux,

   - on détermine, à partir de cette somme, la contribution Sp des neutrons prompts issus des fissions thermiques et la contribution Sr des neutrons retardés issus des fissions thermiques, épithermiques et rapides,

   - on exprime Sp et Sr comme des combinaisons linéaires des quantités respectives des M+N isotopes, les coefficients de ces combinaisons linéaires étant préalablement déterminés par étalonnage, et

   - on détermine la quantité de chacun des M+N isotopes à partir de Sp et Sr ainsi exprimés et d'au moins M+N-2 informations supplémentaires, relatives aux quantités des M+N isotopes.

2. Procédé selon la revendication 1, dans lequel ces informations supplémentaires sont des corrélations entre les quantités des M+N isotopes.

3. Procédé selon l'une quelconque des revendications 1 et 2, dans lequel les matières fissile et fertile comprennent l'uranium 235, l'uranium 238, le plutonium 239 et le plutonium 241.

4. Dispositif d'analyse d'un objet (2), notamment d'un colis de déchets radioactifs, susceptible de contenir une matière fissile ou une matière fertile ou les deux, la matière fissile comprenant M isotopes fissiles et la matière fertile comprenant N isotopes fertiles, M et N étant des nombres entiers au moins égaux à 1, ce dispositif étant **caractérisé en ce qu'**il comprend :

   - des moyens (8, 10) d'irradiation de l'objet par un flux neutronique formé de neutrons thermiques, épithermiques et rapides et résultant d'une suite d'impulsions initiales de neutrons rapides, les neutrons thermiques provoquant des fissions dans la matière fissile et les neutrons épithermiques et rapides provoquant des fissions dans la matière fissile et dans la matière fertile,

- des moyens (4, 52) de comptage de neutrons, prévus pour mesurer les signaux neutroniques prompts et retardés émis par l'objet après chaque impulsion, et
- des moyens (6) de traitement des signaux ainsi mesurés, prévus pour cumuler ces signaux et obtenir, après la dernière impulsion, la somme de tous les signaux, déterminer, à partir de cette somme, la contribution Sp des neutrons prompts issus des fissions thermiques et la contribution Sr des neutrons retardés issus des fissions thermiques, épithermiques et rapides, et déterminer la quantité de chacun des M+N isotopes à partir de Sp et Sr et d'au moins M+N-2 informations supplémentaires, relatives aux quantités des M+N isotopes, en exprimant Sp et Sr comme des combinaisons linéaires de ces quantités, les coefficients de ces combinaisons linéaires étant préalablement déterminés par étalonnage.

5. Dispositif selon la revendication 4, dans lequel les moyens d'irradiation comprennent :

- au moins une source (8) de neutrons rapides fonctionnant en mode pulsé et
- des moyens (10) de thermalisation de ces neutrons rapides.

6. Dispositif selon la revendication 5, dans lequel les moyens de thermalisation comprennent une enceinte (10) qui comporte une zone centrale (12) destinée à recevoir l'objet (2) et dont au moins trois côtés sont délimités par une épaisseur (14, 60) de matériau modérateur, la source de neutrons (8) étant disposée sur un quatrième côté de cette enceinte et les moyens (4, 52) de comptage de neutrons étant disposés sur les trois côtés, entre la zone centrale et l'épaisseur de matériau modérateur, une épaisseur de matériau multiplicateur (22/ 24 ; 50) étant prévue entre la zone centrale et la source de neutrons ainsi qu'entre cette zone centrale et les moyens de comptage de neutrons.

7. Dispositif selon la revendication 6, dans lequel chaque moyen de comptage de neutrons est de plus entouré par une épaisseur (26) de matériau neutrophage.

8. Dispositif selon l'une quelconque des revendications 6 et 7, dans lequel chaque moyen de comptage de neutrons est également entouré d'un matériau modérateur (28).

9. Dispositif selon l'une quelconque des revendications 6 à 8, comprenant en outre une paroi (36) en matériaux neutrophage et modérateur qui délimite le quatrième côté de l'enceinte, l'épaisseur correspondante (22) de matériau multiplicateur étant comprise entre cette paroi (36) et la zone centrale (12).

10. Dispositif selon l'une quelconque des revendications 6 à 9, comprenant en outre des moyens (46, 48 ; 68, 70, 72) de rotation de l'objet (2) dans la zone centrale de l'enceinte.

**Patentansprüche**

1. Verfahren zur Analyse eines Gegenstands (2), vor allem eines radioaktiven Abfallpakets, das einen Spaltstoff oder einen Brutstoff oder beides enthalten kann, wobei der Spaltstoff M spaltbare Isotope enthält, der Brutstoff N fruchtbare bzw. brutfähige Isotope enthält, M und N ganze Zahlen wenigstens gleich 1 sind und dieses Verfahren dabei **dadurch gekennzeichnet ist, dass**:

- man den Gegenstand mit einem Neutronenfluss bestrahlt, gebildet durch thermische, epithermische und schnelle Ionen und resultierend aus einer Folge von Initialimpulsen schneller Neutronen, wobei die thermischen Neutronen Spaltungen in dem Spaltstoff verursachen und die epithermischen und schnellen Neutronen Spaltungen in dem Spaltstoff und dem Brutstoff verursachen,
- man die durch den Gegenstand emittierten prompten und verzögerten Neutronensignale nach jedem Impuls misst und diese Signale kumuliert, um nach dem letzten Impuls die Summe aller Signale zu erhalten,
- man aufgrund dieser Summe den Beitrag Sp der von den thermischen Spaltungen stammenden prompten Neutronen und den Beitrag Sr der von den thermischen, epithermischen und schnellen Spaltungen stammenden verzögerten Neutronen bestimmt,
- man Sp und Sr als Linearkombinationen der jeweiligen Quantitäten der M+N Isotope ausdrückt, wobei die Koeffizienten dieser Linearkombinationen vorher durch Eichung bestimmt werden, und
- man die Quantität jedes der M+N Isotope aufgrund der so ausgedrückten Beiträge Sp und Sr und wenigstens M+N-2 zusätzlicher, die Quantitäten der M+N Isotope betreffender Informationen bestimmt.

2. Verfahren nach Anspruch 1, bei dem diese zusätzlichen Informationen Korrelationen zwischen den Quantitäten der M+N Isotope sind.

3. Verfahren nach einem der Ansprüche 1 und 2, bei dem die Spaltstoffe und Brutstoffe Uran 235, Uran 238, Plutonium 239 und Plutonium 241 umfassen.

4. Vorrichtung zur Analyse eines Gegenstands (2), vor allem eines radioaktiven Abfallpakets, das einen Spaltstoff oder einen Brutstoff oder beides enthalten kann, wobei der Spaltstoff M spaltbare Isotope enthält, der Brutstoff N fruchtbare bzw. brutfähige Isotope enthält, M und N ganze Zahlen wenigstens gleich 1 sind und diese Vorrichtung dabei **dadurch gekennzeichnet ist, dass** sie umfasst:

   - Einrichtungen (8, 10) zur Bestrahlung des Gegenstands durch einen Neutronenfluss, gebildet durch thermische, epithermische und schnelle Ionen und resultierend aus einer Folge von Initialimpulsen schneller Neutronen, wobei die thermischen Neutronen Spaltungen in dem Spaltstoff verursachen und die epithermischen und schnellen Neutronen Spaltungen in dem Spaltstoff und dem Brutstoff verursachen,
   - Einrichtungen (4, 52) zum Zählen von Neutronen, vorgesehen um die durch den Gegenstand emittierten prompten und verzögerten Neutronensignale nach jedem Impuls zu messen, und
   - Einrichtungen (6) zur Verarbeitung der so gemessenen Signale, vorgesehen um diese Signale zu kumulieren und nach dem letzten Impuls die Summe aller Signale zu erhalten, aufgrund dieser Summe den Beitrag Sp der von den thermischen Spaltungen stammenden prompten Neutronen und den Beitrag Sr der von den thermischen, epithermischen und schnellen Spaltungen stammenden verzögerten Neutronen zu bestimmen und die Quantität jedes der M+N Isotope aufgrund der so ausgedrückten Beiträge Sp und Sr und wenigstens M+N-2 zusätzlicher, die Quantitäten der M+N Isotope betreffender Informationen zu bestimmen, indem man Sp und Sr als Linearkombinationen der jeweiligen Quantitäten der M+N Isotope ausdrückt, wobei die Koeffizienten dieser Linearkombinationen vorher durch Eichung bestimmt werden.

5. Vorrichtung nach Anspruch 4, bei der die Bestrahlungseinrichtungen umfassen:

   - wenigstens eine im Putsbetrieb arbeitende Quelle (8) schneller Neutronen, und

   - Einrichtungen (10) zur Thermalisierung dieser schnellen Neutronen.

6. Vorrichtung nach Anspruch 5, bei der die Thermalisierungseinrichtungen eine Kammer (10) umfassen, die eine zentrale Zone (12) zur Aufnahme des Gegenstands (2) aufweist und bei der wenigstens drei Seiten abgegrenzt sind durch eine Dicke (14, 60) aus Moderatormaterial, wobei die Neutronenquelle (8) auf einer vierten Seite dieser Kammer angeordnet ist und die Neutronenzähleinrichtungen (4, 52) auf den drei Seiten zwischen der zentralen Zone und der Dicke aus Moderatormaterial angeordnet sind, wobei ein Vermehrermaterial (22, 24; 50) vorgesehen ist zwischen der zentralen Zone und der Neutronenquelle sowie zwischen dieser zentralen Zone und den Neutronenzähleinrichtungen.

7. Vorrichtung nach Anspruch 6, bei der jede Neutronenzähleinrichtung zudem umgeben ist von einer Dicke (26) aus neutrophagem Material.

8. Vorrichtung nach einem der Ansprüche 6 und 7, bei der jede Neutronenzähleinrichtung auch von einem Moderatormaterial (28) umgeben ist.

9. Vorrichtung nach einem der Ansprüche 6 bis 8, die außerdem eine Wand (36) aus neutrophagem und neutronenbremsendem Material umfasst, welche die vierte Seite der Kammer abgrenzt, wobei die entsprechende Dicke (22) aus Vermehrermaterial zwischen dieser Wand (36) und der zentralen Zone (12) enthalten ist.

10. Vorrichtung nach einem der Ansprüche 6 bis 9, die außerdem Einrichtungen (46, 48; 68, 70, 72) zum Drehen des Gegenstands in der zentralen Zone der Kammer umfasst.

**Claims**

1. Process for analyzing an object (2), particularly a radioactive waste package, that might contain a fissile material or a fertile material or both, the fissile material comprising M fissile isotopes and the fertile material comprising N fertile isotopes, where M and N are integer numbers equal to at least 1, this process being **characterized in that**:

   - the object is irradiated by a neutron flux formed of thermal, epithermal and fast neutrons and resulting from a sequence of initial pulses of fast neutrons, the thermal neutrons causing fission in the fissile material and the epithermal and fast neutrons causing fission in the fissile material and in the fertile material,

- the prompt and delayed neutronic signals emitted by the object after each pulse are measured, and these signals are accumulated to obtain the sum of all signals after the last pulse,
- this sum is used to determine the contribution Sp of prompt neutrons produced by thermal fission and the contribution Sr of delayed neutrons produced by thermal, epithermal and fast fission reactions,
- Sp and Sr are expressed as linear combinations of the quantities of M+N isotopes, the coefficients of these linear combinations being previously determined by calibration, and
- the quantity of each of the M+N isotopes is determined from Sp and Sr thus expressed and at least M+N-2 additional items of information about quantities of M+N isotopes.

2. Process according to claim 1, in which this additional information may consist of correlations between the quantities of M+N isotopes.

3. Process according to either claim 1 or 2, in which the fissile and fertile materials contain uranium 235, uranium 238, plutonium 239 and plutonium 241.

4. Device for analyzing an object (2), particularly a radioactive waste package, that may contain fissile material or fertile material or both, the fissile material containing M fissile isotopes and the fertile material containing N fertile isotopes, where M and N are integer numbers equal to at least 1, this device being **characterized in that** it comprises:

- means (8, 10) of irradiating the object by a neutron flux consisting of thermal, epithermal and fast neutrons and resulting from a sequence of initial fast neutron pulses, the thermal neutrons causing fission in the fissile material and the epithermal and fast neutrons causing fission in the fissile material and in the fertile material,
- means (4, 52) of counting neutrons, designed to measure prompt and delayed neutronic signals emitted by the object after each pulse, and
- means (6) of processing the signals thus measured, designed to accumulate these signals and, after the last pulse, to obtain the sum of all signals, to use this sum to determine the contribution Sp of prompt neutrons produced by thermal fission and the contribution Sr of delayed neutrons produced by thermal, epithermal and fast fission reactions, and to use Sp and Sr to determine the quantity of each of the M+N isotopes and at least M+N-2 additional items of information related to the quantities of M+N isotopes, expressing Sp and Sr as linear combinations of these quantities, the coefficients of these linear combinations being determined beforehand by calibration.

5. Device according to claim 4, in which the irradiation means comprise:

- at least one source (8) of fast neutrons operating in pulsed mode and,
- means (10) of thermalizing these fast neutrons.

6. Device according to claim 5, in which the thermalization means comprises a containment (10) that includes a central area (12) in which the object (2) will be placed and in which at least three sides are delimited by a thickness (14, 60) of moderator material, the neutron source (8) being placed on a fourth side of this containment and the neutron counting means (4, 52) being placed on the three sides between the central area and the thickness of moderator material, a thickness of the multiplier material (22, 24, 50) being provided between the central area and the neutron source and between the central area and neutron counting means.

7. Device according to claim 6, in which each neutron counting means may also be surrounded by a thickness (26) of neutron poison material.

8. Device according to either of claims 6 and 7, in which each neutron counting means may also be surrounded by a moderator material (28).

9. Device according to any one of claims 6 to 8, also comprising a wall (36) made of neutron poison and moderator materials that delimits the fourth side of the containment, the thickness (22) corresponding to the multiplier material being between this wall (36) and the central area (12).

10. Device according to any one of claims 6 to 9, also comprising means (46, 48; 68, 70, 72) of rotating the object (2) within the central area of the containment.

FIG.1

EP 1 086 387 B1

FIG. 2

FIG. 3

FIG. 4

FIG. 5